# EUROPEAN PATENT APPLICATION

(11) **EP 4 135 222 A1**
(43) Date of publication of application: **15.02.2023**
(21) Application number: 21774062.0
(22) Date of filing: 25.03.2021
(51) Int. Cl.: H04B 10/516, H04B 10/2575

(54) **BASEBAND UNIT, ANALOG FRONTHAUL SYSTEM, AND SIGNAL PROCESSING METHOD**

(30) Priority: 25.03.2020 CN 202010220360
(71) Applicant: ZTE Corporation, Shenzhen, Guangdong 518057 (CN)
(72) Inventor: ZHOU, Dongyue, Shenzhen, Guangdong 518057 (CN); LIU, Hanrui, Shenzhen, Guangdong 518057 (CN); LIN, Fumin, Shenzhen, Guangdong 518057 (CN); WU, Jian, Shenzhen, Guangdong 518057 (CN)
(74) Representative: Canzler & Bergmeier Patentanwälte Partnerschaft mbB
(86) International application number: PCT/CN2021/083036
(87) International publication number: WO 2021/190607

(57) **Abstract**

The present disclosure provides a baseband unit, comprising a first electro-optic modulator and a second electro-optic modulator for modulating a baseband signal, the second electro-optic modulator being coupled to an input end of the first electro-optic modulator or to an output end of the first electro-optic modulator. The second electro-optic modulator is configured to receive a drive radio frequency signal, and to perform sub-carrier modulation according to the drive radio frequency signal. The present disclosure further provides an analog wireless fronthaul system and a signal processing method.

## Description

### TECHNICAL FIELD

The present disclosure relates to the field of wireless communication technology, and in particular, to a base band unit (BBU), an analog fronthaul system, and a signal processing method.

### BACKGROUND

5G systems have been already commercially used in the Sub 6G band (3.4GHz -3.6GHz), but the research on the 5G systems in high frequency bands (26G and 40G) is not yet mature. Information access networks are very important, and three technical problems to be urgently solved in typical service scenarios are clearly defined in the 5G standards and include: enhanced mobile broadband (eMBB), massive machine type communication (mMTC) and ultra-reliable low latency communication (uRLLC). The optical wavelength division multiplexing (WDM) technology having great potential together with the orthogonal frequency division multiplexing (OFDM) technology/filtered OFDM (F-OFDM) multiple access technology make full use of technical solutions which are synchronously compatible at high frequency bands and low frequency bands, and the above technologies can be combined to greatly improve capacity and reliability of a mobile access system, have the characteristics of small volume and low power consumption, and can provide technical reserves for subsequent system upgrading.

A radio over fiber access system includes both of a digital fronthaul system and an analog fronthaul system. A system having an operating frequency within the Sub 6G band usually adopts a digital fronthaul mode which has the advantage of low cost and the disadvantages of large occupied bandwidth and long delay. For the 5G high frequency bands, adopting the analog fronthaul system has technical advantages. At present, the analog fronthaul system does not cover a millimeter-wave band, and thus is limited in application.

### SUMMARY

An embodiment of the present disclosure provides a BBU, including: a first electro-optic modulator configured to modulate a baseband signal; and a second electro-optic modulator coupled to an input terminal or an output terminal of the first electro-optic modulator, and configured to receive a drive radio frequency signal and perform subcarrier modulation according to the drive radio frequency signal.

An embodiment of the present disclosure further provides an analog radio over fiber fronthaul system, including the BBU described above.

An embodiment of the present disclosure further provides a signal processing method, including: performing at least two stages modulation on a received signal; and performing at least two stages modulation on the received signal includes: receiving a drive radio frequency signal, and performing subcarrier modulation according to the drive radio frequency signal; and modulating a received baseband signal.

### BRIEF DESCRIPTION OF DRAWINGS

The accompanying drawings are intended to provide a further understanding of the embodiments of the present disclosure and constitute a part of the specification. Together with the embodiments of the present disclosure, the drawings are used to explain the present disclosure, but do not constitute any limitation to the present disclosure. The above and other features and advantages will become more apparent to those of ordinary skill in the art from the description of exemplary embodiments with reference to the drawings. In the drawings:
FIG. 1 is a schematic diagram illustrating two-stage modulation of a BBU according to the present disclosure;
FIG. 2 is a schematic structural diagram of a BBU according to the present disclosure;
FIG. 3 is a schematic diagram of a hybrid multiplexing process of code division multiplexing (CDM) and frequency division multiplexing (FDM) according to the present disclosure;
FIG. 4 is a schematic structural diagram of an analog radio over fiber (A-ROF) fronthaul system according to the present disclosure;
FIG. 5 is a schematic structural diagram of a sending end of an A-ROF fronthaul system provided with a two-stage Mach-Zindel Modulator (MZM) modulation structure according to the present disclosure; and
FIG. 6 is a schematic diagram of an A-ROF fronthaul system in a bidirectional direct transmission scenario according to the present disclosure.

### DETAIL DESCRIPTION OF EMBODIMENTS

Exemplary embodiments of the present disclosure will be described more fully below with reference to the drawings, but the exemplary embodiments described herein may be specifically embodied in different forms and should not be interpreted as being limited to embodiments described herein. Rather, the embodiments are provided to make the present disclosure thorough and complete, and are intended to enable those of ordinary skill in the art to fully understand the scope of the present disclosure.

The term "and/or" used herein includes one associated listed item or any and all combinations of one or more of the associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "comprise" and/or "be made of" used herein indicate(s) the presence of the described features, integers, operations, elements and/or components, but do not exclude the presence or addition of one or more other features, integers, operations, elements, components and/or combinations thereof.

The embodiments of the present disclosure can be described with reference to plans and/or cross-sectional views with the aid of idealized schematic diagrams of the present disclosure. Accordingly, the exemplary drawings may be modified according to manufacturing techniques and/or tolerances. The embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

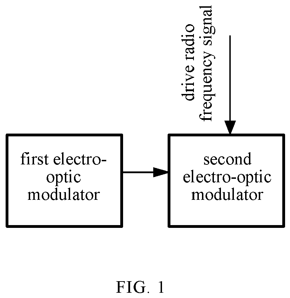

An embodiment of the present disclosure provides a BBU, as shown in FIG. 1, including a first electro-optic modulator configured to modulate a baseband signal, and a second electro-optic modulator coupled to an input terminal or an output terminal of the first electro-optic modulator, and configured to receive a drive radio frequency signal and perform subcarrier modulation according to the drive radio frequency signal.

The BBU provided by the embodiment of the present disclosure includes the first electro-optic modulator configured to modulate the baseband signal, and the second electro-optic modulator coupled to the input terminal or the output terminal of the first electro-optic modulator, and configured to receive the drive radio frequency signal and perform subcarrier modulation according to the drive radio frequency signal. With the addition of the second electro-optic modulator, the BBU provided by the embodiment of the present disclosure adopts a two-stage electro-optic modulator structure, and achieves an adjustment to an operating frequency of an A-ROF fronthaul system by adjusting a frequency range of the drive radio frequency signal input to the second electro-optic modulator, so that an operating signal of the A-ROF fronthaul system can cover the millimeter-wave band, thereby solving a compatibility problem of low frequency bands and high frequency bands, and realizing full coverage of 5G high and low frequency bands and continuous adjustment to the operating frequency of the A-ROF fronthaul system.

The second electro-optic modulator and the first electro-optic modulator are connected in series to form a two-stage modulation structure, and the second electro-optic modulator is coupled to the input terminal or the output terminal of the first electro-optic modulator, that is, modulation of the baseband signal may be performed first, or subcarrier modulation may be performed first, so a location of the first electro-optic modulator and a location of the second electro-optic modulator may be interchanged. In the embodiments of the present disclosure, a case where the modulation of the baseband signal is performed first and then the subcarrier modulation is performed is taken as an example for illustration.

Adopting the two-stage modulation structure facilitates an integrated design, and the two electro-optic modulators may be implemented on the same optoelectronic integrated chip at one time. The series structure shares one active laser, so that the series structure is low in manufacturing cost, small in size and better in anti-interference performance.

The second-stage electro-optic modulation can realize the subcarrier modulation, a frequency of an input drive radio frequency signal determines a location of a wireless communication frequency point of the A-ROF fronthaul system, and a frequency of an output signal of the BBU changes with a change of a frequency of the drive radio frequency signal (i.e., a subcarrier). It should be noted that a bandwidth of the second electro-optic modulator is greater than or equal to the frequency of the drive radio frequency signal.

In some embodiments, a modulation mode of the second electro-optic modulator may be double-sideband suppressed-carrier modulation, which may output a double-frequency radio frequency signal, that is, when the frequency of the radio frequency signal input to the second electro-optic modulator is continuously adjusted in a range of 1GHz to 30GHz, an analog wireless fronthaul signal with a carrier varying in a range of 2GHz to 60GHz may be obtained.

In some embodiments, the first electro-optic modulator may be a direct modulator or an external modulator. The external modulator includes an intensity modulator, a phase modulator, and an In-phase Quadrature (IQ) modulator. A modulation mode of the first electro-optic modulator may be double-sideband modulation or single-sideband modulation.

It should be noted that the BBU provided by the embodiments of the present disclosure may also adopt a multi-stage modulation structure. For example, a three-stage modulation structure may realize output of a quadruple-frequency signal, but a filtering procedure for eliminating a low-order interference signal needs to be added correspondingly.

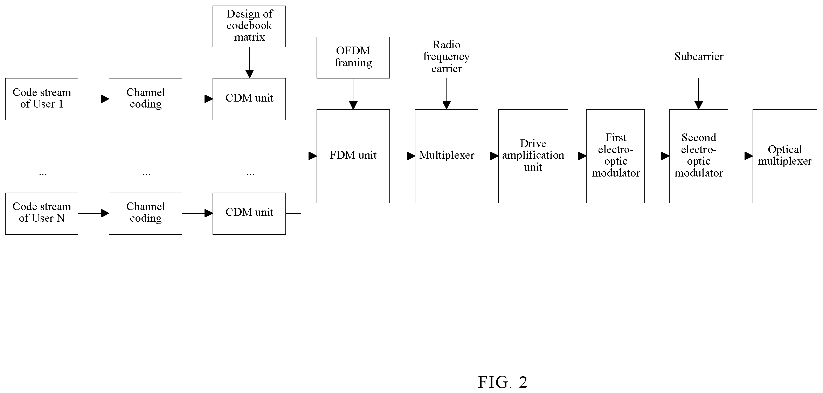

In some embodiments, as shown in FIG. 2, the BBU may further include an optical multiplexer configured to combine a series of optical signals (i.e., optical signals of every channel) carrying information but having different wavelengths into one signal, spacing between the channels of the optical multiplexer is twice greater than an RF frequency of the drive radio frequency signal.

The optical multiplexer may be a Wavelength Division Multiplexer (WDM), a Coarse Wavelength Division Multiplexer (CWDM), a Dense Wavelength Division Multiplexer (DWDM), or an Arrayed Waveguide Grating (AWG).

In some embodiments, the BBU may further include a FDM unit, and a CDM unit configured to perform CDM processing on multiple user code streams. The FDM unit is coupled to the CDM unit and is configured to perform FDM processing on each user code stream subjected to the CDM processing.

The BBU provided by the embodiments of the present disclosure realizes CDM-FDM hybrid multiplexing through the FDM unit and the CDM unit, and thus can increase the number of users of the A-ROF fronthaul system by more than 50% (that is, an overload rate can be more than 1.5 times) compared with the existing Orthogonal Frequency Division Multiple Access (OFDMA) solution, so that a large-scale Internet of Things can be widened, and a bit error rate can be obviously reduced. With the multiplexing technologies for a code domain and a frequency domain applied to the A-ROF fronthaul system, an amount of user access to a central control-cloud radio access network (C-RAN) can be increased, different codebook matrixes can be designed and selected according to requirements of scenarios, and different overload rates can be achieved, so that the A-ROF fronthaul system has high flexibility and is applicable in a wide range.

In some embodiments, the FDM unit is an OFDM unit or an F-OFDM unit.

In some embodiments, the CDM unit includes a codebook matrix, the number of rows of the codebook matrix is equal to the number of subcarriers in the FDM unit or the number of the subcarriers after the subcarriers are grouped, the number of columns of the codebook matrix is equal to a total number of user code streams, and the number of the subcarriers is less than the total number of the user code streams.

In order to reduce decoding complexity of a signal receiving end (i.e., user equipment) and decoding computation amount to reduce chip resource consumption and hardware cost, the codebook matrix may be a sparse matrix in some embodiments.

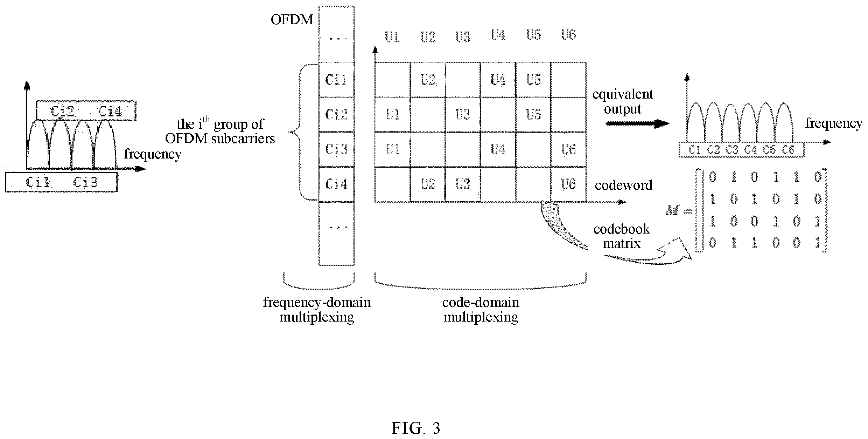

A process of the CDM-FDM hybrid multiplexing is described in detail below with reference to FIG. 3. As shown in FIG. 3, a codebook matrix M having K rows and N columns (K<N) is first designed, and the codebook matrix may be flexibly designed and selected to achieve different overload rates. Then, the subcarriers of the FDM unit (e.g., the OFDM unit) are evenly divided into several groups each including K=4 subcarriers, and each subcarrier corresponds to one row of the codebook matrix M; and after mapping of the codebook matrix M is completed, N=6 virtual subcarrier frequency resources are output, that is, N=6 users may be supported. Since K<N, an overload rate N/K=1.5 (greater than 1), 6 users are mapped to 4 orthogonal subcarriers of the OFDM unit through the codebook matrix M, thus producing an effect of increasing the number of the users, and realizing hybrid multiplexing of a frequency domain and a code domain.

In some embodiments, a plurality of CDM units and a plurality of FDM units may be provided, with the FDM units in one-to-one corresponds with the CDM units, thus realizing parallel processing of multiple CDM-FDM hybrid multiplexing processes.

In the embodiments of the present disclosure, as shown in FIG. 2, a plurality of CDM units and one FDM unit are provided, and the FDM unit is separately coupled to each of the CDM units and is capable of performing FDM processing on output signals of all the CDM units together.

In the embodiments of the present disclosure, as shown in FIG. 2, the BBU may further include: a multiplier and a drive amplification unit. The multiplier is respectively coupled to the FDM unit and the drive amplification unit, the drive amplification unit is connected to the electro-optic modulators of the two stages, and the first-stage modulation may be performed by the first electro-optic modulator or the second electro-optic modulator.

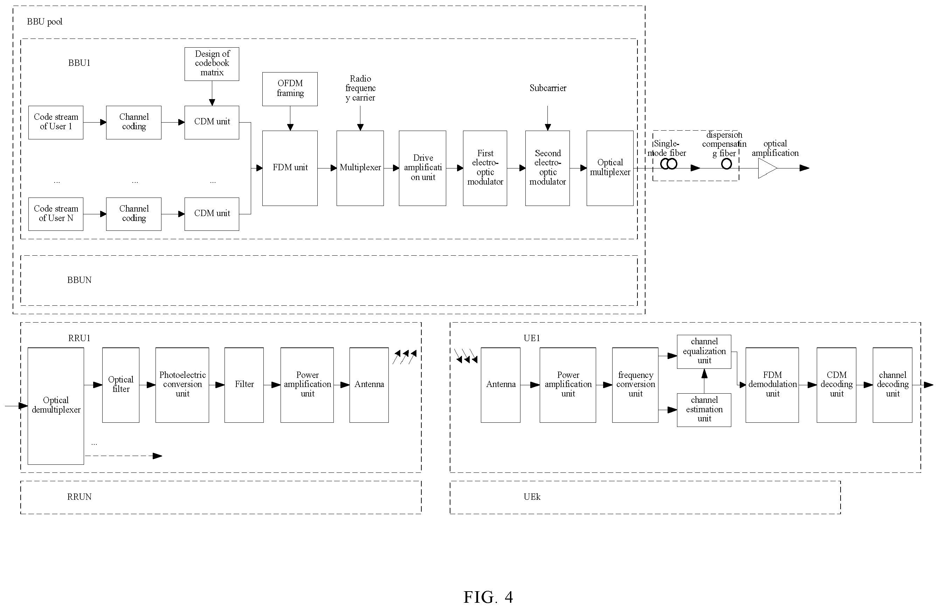

An embodiment of the present disclosure further provides an A-ROF fronthaul system, as shown in FIG. 4, including a BBU which is the BBU described above.

The A-ROF fronthaul system provided by the embodiment of the present disclosure includes the BBU, and the BBU includes the first electro-optic modulator configured to modulate the baseband signal and the second electro-optic modulator coupled to the input terminal or the output terminal of the first electro-optic modulator and configured to receive the drive radio frequency signal and perform subcarrier modulation according to the drive radio frequency signal. With the addition of the second electro-optic modulator, the BBU provided by the embodiments of the present disclosure adopts the two-stage electro-optic modulator structure, and achieves an adjustment to an operating frequency of the A-ROF fronthaul system by adjusting the frequency range of the drive radio frequency signal input to the second electro-optic modulator, so that an operating signal of the A-ROF fronthaul system can cover the millimeter-wave band, thereby solving the compatibility problem of the low frequency bands and the high frequency bands, and realizing full coverage of the 5G high frequency bands and the 5G low frequency bands and continuous adjustment to the operating frequency of the A-ROF fronthaul system.

It should be noted that in the A-ROF fronthaul system, the BBU may be included in a BBU pool, that is, the A-ROF fronthaul system includes the BBU pool including a plurality of BBUs.

In the embodiments of the present disclosure, as shown in FIG. 4, the A-ROF fronthaul system further includes a remote radio unit (RRU) including an optical demultiplexer. The optical demultiplexer is coupled to the optical multiplexer of the BBU through an optical fiber, and is configured to perform demultiplexing processing on a received signal (i.e., a signal output from the optical multiplexer of the BBU), that is, to separate optical signals having different wavelengths from one another.

In some embodiments, the RRU may further include: an optical filter, a photoelectric conversion unit, a filter, a power amplification unit, an antenna, etc. After the RRU completes a series of processing such as demultiplexing, filtering, photoelectric conversion and amplification, the RRU sends a signal to a user equipment (UE) through the antenna.

The photoelectric conversion unit may include a photodetector, an avalanche photodetector (APD), or a PIN detector, and has a bandwidth covering a highest frequency point of the A-ROF fronthaul system. The antenna, the power amplification unit and the filter may be of a broadband type or a narrowband type, as long as the antenna, the power amplification unit and the filter may cover a frequency range of a bandpass signal of the A-ROF fronthaul system. The antenna may be a single-input and single-output structure, a multiple-input multiple-output (MIMO) structure, or a massive MIMO structure.

By changing a frequency of a subcarrier radio frequency signal (i.e., the drive radio frequency signal) input to the second electro-optic modulator in the A-ROF fronthaul system, an adjustment to a frequency of a modulation signal output by the photoelectric conversion unit in the RRU may be achieved, and the modulation signal is sent to the UE through the antenna.

In some embodiments, the optical fiber includes a single-mode fiber, and a dispersion compensating fiber configured to perform dispersion compensation on the single-mode fiber.

In some embodiments, the optical multiplexer and the optical demultiplexer are respectively provided in the BBU and the RRU, and multiple signals are simultaneously transmitted by a single optical fiber, so as to increase capacity of the A-ROF fronthaul system. The number of channels of the optical multiplexer may be 4, 8, 16, 32, 64, or 128 etc., a frequency of the optical multiplexer may be less than 40G, and optical frequency spacing between the channels may be 50G or 100G, and is 100G when the frequency is greater than 40G.

The BBU, the optical fiber and the RRU constitute a signal sending end of the A-ROF fronthaul system. In some embodiments, the A-ROF fronthaul system further includes a UE serving as a signal receiving end of the A-ROF fronthaul system, and the UE includes a CDM decoding unit and an FDM demodulation unit. The FDM demodulation unit is configured to demodulate an FDM signal received from the RRU. The CDM decoding unit is coupled to the FDM demodulation unit and is configured to perform CDM decoding processing on a demodulated signal.

The UE receives the signal sent from the RRU through an antenna. In some embodiments, the UE may further include: a power amplification unit, a frequency conversion unit, a channel equalization unit, a channel estimation unit and a channel decoding unit. The channel equalization unit is configured to perform electronic compensation on chromatic dispersion, nonlinearity, IQ imbalance and the like occurring in a transmission process through the optical fiber, and preprocess a signal spatially transmitted in a wireless manner.

In the embodiments of the present disclosure, the baseband signal is subjected to carrier aggregation by adopting the OFDM technology at the sending end of the A-ROF fronthaul system. Channel estimation (realized by adopting an OFDM training sequence method) and signal equalization (realized by adopting the Least Square method which has lower computational complexity) are respectively performed at the receiving end of the A-ROF fronthaul system, and an electro-optic modulation process and an optical transmission process are compensated by further adopting the Low Density Parity Check Code (LDPC)/Polar coding technology.

By adjusting the frequency of the drive radio frequency signal input to the second electro-optic modulator and designing bandwidths of the microwave devices (including driving circuits of the electro-optic modulators, a bandwidth of the filter, a bandwidth of the photoelectric conversion unit, a bandwidth of the antenna and an operating bandwidth of the power amplification unit) in the A-ROF fronthaul system, a frequency band covered by the A-ROF fronthaul system includes the Sub 6G band and the millimeter-wave band, and the A-ROF fronthaul system can be flexibly upgraded to a higher frequency band (26G, 40G, 60G or any other frequency point), so that continuous adjustment of the operating frequency of the A-ROF fronthaul system can be realized, and the 5G high frequency bands and the5G low frequency bands can be fully covered.

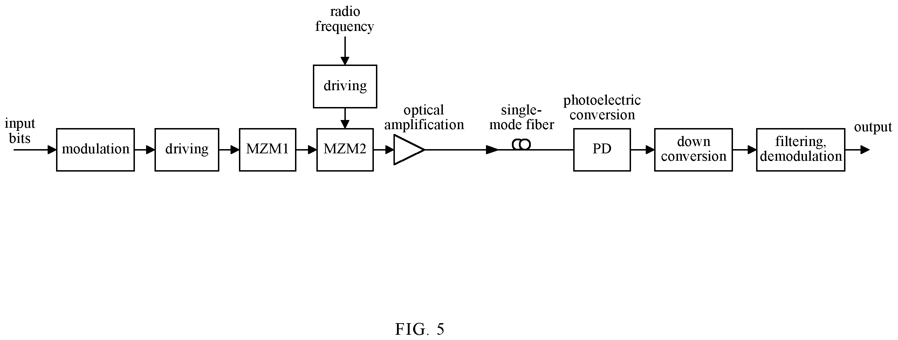

With reference to FIG. 4 and FIG. 5, for being applied to the C-RAN, the BBU of the A-ROF fronthaul system includes two stages of electro-optic modulators which adopt the external modulation technology, and the first and second electro-optic modulators are lithium niobate MZMs. In order to reduce a cost, the first-stage electro-optic modulation (i.e., the first electro-optic modulator MZM1) may adopt a low-bandwidth MZM in a double-sideband modulation mode, an electrical signal input to the first electro-optic modulator is the baseband signal, and an output optical signal is an optical baseband signal of a baseband. A radio frequency signal input to the second-stage electro-optic modulation (i.e., the second electro-optic modulator MZM2) is used as a subcarrier and usually has a relatively high frequency which is up to tens of GHz, so that a high-bandwidth MZM is selected and a double-sideband suppressed-carrier modulation mode is adopted. The photoelectric conversion unit (PD) in the RRU of the A-ROF fronthaul system performs detection directly, and outputs a signal having a frequency twice the frequency of the radio frequency signal input to the second electro-optic modulator, thus realizing millimeter-wave modulation. When the frequency of the subcarrier is changed, a frequency of a corresponding output signal is changed accordingly.

In another embodiment of the present disclosure, the first electro-optic modulator may be a Directly Modulated Laser (DML), and the signal input to the first electro-optic modulator may be the baseband signal or a Sub 6G radio frequency signal. The second electro-optic modulator may adopt the external modulation technology and be a lithium niobate MZM, and the signal input to the second electro-optic modulator is a radio frequency signal. The photoelectric conversion unit (PD) in the RRU of the A-ROF fronthaul system performs detection directly, and outputs the signal having the frequency twice the frequency of the radio frequency signal input to the second electro-optic modulator, thus realizing access of any signal at any of two frequency points within the Sub 6G band or the millimeter-wave band. The A-ROF fronthaul system provided by the embodiments of the present disclosure can be compatible with an existing 5G access network, and on the other hand, can expand the existing Sub 6G band, and can be flexibly upgraded to a higher frequency band (26G, 40G, 60G or any other frequency point).

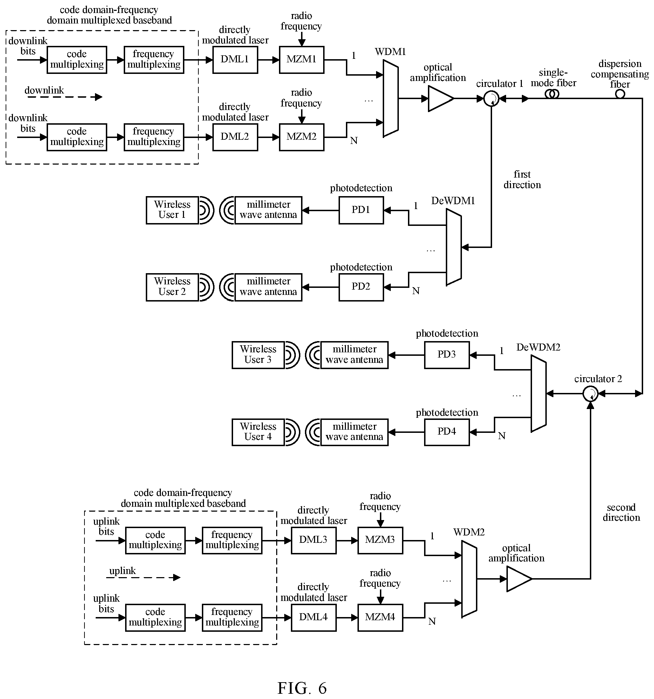

As shown in FIG. 6, the A-ROF fronthaul system provided by the embodiments of the present disclosure may be applied in a bidirectional optical fiber direct transmission scenario, i.e., a peer-to-peer bidirectional direct transmission scenario. As shown in FIG. 6, parallel bidirectional communication is achieved in such scenario by using optical circulators, and at each of two ends performing interaction is provided with one optical circulator.

Two stages of analog electro-optic modulators are provided, the first-stage modulation is configured to realize baseband modulation and may adopt a DML or an external modulation MZM, and the second-stage modulation may adopt the external modulation technology.

The wavelength division multiplexing technology is adopted, multiple signals are simultaneously transmitted through a single optical fiber, and a channel frequency of the optical multiplexer is consistent with that of the laser, thus forming the WDM A-ROF fronthaul system. The optical multiplexer may be the WDM, the DWDM, the CWDM or the AWG.

The FDM technology is adopted, and the baseband signal is subjected to carrier aggregation by adopting the OFDM technology at the sending end of the A-ROF fronthaul system. The channel estimation (realized by adopting the OFDM training sequence method) and the signal equalization (realized by adopting the Least Square method which has lower computational complexity) are respectively performed at the receiving end of the A-ROF fronthaul system, and the electro-optic modulation process and the optical transmission process are compensated by further adopting the LDPC/Polar coding technology.

The CDM technology is adopted. The sparse codebook matrix M is first designed, and then the subcarriers of the OFDM unit are evenly divided into a plurality of groups, with each group including K subcarriers and each of the K subcarriers corresponding to one row of the sparse codebook matrix M; and after mapping of the sparse codebook matrix M is completed, N virtual subcarrier frequency resources are output, that is, N users may be supported, thus realizing the hybrid multiplexing of the frequency domain and the code domain.

The A-ROF fronthaul system provided by the embodiments of the present disclosure adopts a multi-dimensional hybrid multiplexing method which combines the CDM technology, the OFDM technology and the optical wavelength division multiplexing technology, and can control signal processing complexity, solve the compatibility problem of a wireless fronthaul solution of the 5G systems at the low frequency band and the high frequency band, and increase the number of massive users accessing a wireless access system, thereby improving frequency efficiency.

An embodiment of the present disclosure further provides a signal processing method, as shown in FIG. 1, including: performing at least two stages of modulation on a received signal. Performing at least two stages of modulation on the received signal includes an operation A and an operation B. In the operation A, a drive radio frequency signal is received, and subcarrier modulation is performed according to the drive radio frequency signal. In the operation A, a second electro-optic modulator receives the drive radio frequency signal and performs subcarrier modulation according to the drive radio frequency signal. In the operation B, a received baseband signal is modulated. In the operation B, a first electro-optic modulator modulates the received baseband signal. It should be noted that the operation B may be performed before or after the operation A.

By adjusting a frequency range of the drive radio frequency signal input to the second electro-optic modulator, an adjustment to an operating frequency of an A-ROF fronthaul system can be achieved, so that an operating signal of the A-ROF fronthaul system can cover the millimeter-wave band, thereby solving the compatibility problem of the A-ROF fronthaul system at the low frequency band and the high frequency band, and realizing full coverage of the 5G high frequency bands and the 5G low frequency bands and continuous adjustment to the operating frequency of the A-ROF fronthaul system.

In some embodiments, a modulation mode of the second electro-optic modulator is double-sideband suppressed-carrier modulation.

In some embodiments, after performing at least two stages of modulation on the received signal, the method may further include: performing optical wavelength division multiplexing processing on the signal subjected to the two stages of modulation. In this operation, an optical multiplexer of a BBU performs the optical wavelength division multiplexing processing on the signal subjected to the two stages of modulation, and transmits the processed signal to an RRU through an optical fiber.

In some embodiments, spacing between channels of the optical multiplexer is twice greater than an RF frequency of the drive radio frequency signal.

In some embodiments, the signal processing method may further include: before performing at least two stages of modulation on the received signal, performing CDM processing on multiple user code streams, and performing FDM processing on each user code stream subjected to the CDM processing. In this operation, a CDM unit of the BBU performs CDM processing on the multiple user code streams, and an FDM unit of the BBU performs FDM processing on each user code stream subjected to the CDM processing, thereby realizing the hybrid multiplexing of the frequency domain and the code domain.

In some embodiments, the CDM unit includes a codebook matrix, the number of rows of the codebook matrix is equal to the number of subcarriers in the FDM unit or the number of the subcarriers after the subcarriers are grouped, the number of columns of the codebook matrix is equal to a total number of the user code streams, and the number of the subcarriers is less than the total number of the user code streams.

In some embodiments, the codebook matrix is a sparse matrix.

In some embodiments, the FDM unit includes an OFDM unit or an F-OFDM unit.

In some embodiments, the signal processing method further includes: transmitting the signal subjected to the optical wavelength division multiplexing processing to the RRU through an optical fiber, so as to allow the RRU to perform demultiplexing processing on the received signal, and transmit the demultiplexed signal to a UE through an antenna.

In some embodiments, the UE receives a signal, which is the demultiplexed signal, sent from the RRU through the antenna, and performs FDM demodulation processing and CDM decoding processing on the signal. The UE may perform channel estimation (realized by adopting the OFDM training sequence method) and signal equalization (realized by adopting the Least Square method which has lower computational complexity), and compensate for an electro-optic modulation process and an optical transmission process by further adopting the LDPC/Polar coding technology.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A baseband unit, called BBU, comprising:
a first electro-optic modulator configured to modulate a baseband signal; and
a second electro-optic modulator coupled to an input terminal or an output terminal of the first electro-optic modulator, and configured to receive a drive radio frequency signal and perform subcarrier modulation according to the drive radio frequency signal.

2. The BBU of claim 1, wherein a modulation mode of the second electro-optic modulator is double-sideband suppressed-carrier modulation.

3. The BBU of claim 1 or 2, further comprising an optical multiplexer, with spacing between channels of the optical multiplexer being twice greater than an RF frequency of the drive radio frequency signal.

4. The BBU of claim 3, further comprising a frequency division multiplexing, called FDM, unit, and a code division multiplexing, called CDM, unit,
the CDM unit is configured to perform CDM processing on multiple user code streams, and
the FDM unit is coupled to the CDM unit and is configured to perform FDM processing on each user code stream subjected to the CDM processing.

5. The BBU of claim 4, wherein the CDM unit comprises a codebook matrix, the number of rows of the codebook matrix is equal to the number of subcarriers in the FDM unit or the number of the subcarriers after the subcarriers are grouped, and the number of columns of the codebook matrix is equal to a total number of the user code streams,
wherein the number of the subcarriers is less than the total number of the user code streams.

6. The BBU of claim 5, wherein the codebook matrix is a sparse matrix.

7. The BBU of claim 4, wherein the FDM unit is an Orthogonal FDM, called OFDM, unit or a Filtered OFDM, called F-OFDM, unit.

8. An analog radio over fiber fronthaul system, comprising the BBU of any one of claims 1 to 7.

9. The analog radio over fiber fronthaul system of claim 8, wherein the BBU is the BBU of any one of claims 3 to 7; and the analog radio over fiber fronthaul system further comprises a remote radio unit, called RRU, comprising an optical demultiplexer coupled to the optical multiplexer of the BBU through an optical fiber.

10. The analog radio over fiber fronthaul system of claim 9, wherein the optical fiber comprises a single-mode fiber, and a dispersion compensating fiber configured to perform dispersion compensation on the single-mode fiber.

11. The analog radio over fiber fronthaul system of claim 9, wherein the BBU is the BBU of any one of claims 4 to 7; and the analog radio over fiber fronthaul system further comprises a user equipment, called UE, which comprises a CDM decoding unit and a FDM demodulation unit,
the FDM demodulation unit is configured to demodulate a FDM signal received from the RRU, and
the CDM decoding unit is coupled to the FDM demodulation unit and is configured to perform CDM decoding processing on a demodulated signal.

12. A signal processing method, comprising: performing at least two stages modulation on a received signal;
performing at least two stages modulation on the received signal comprising:
receiving a drive radio frequency signal, and performing subcarrier modulation according to the drive radio frequency signal; and
modulating a received baseband signal.

13. The method of claim 12, wherein performing subcarrier modulation according to the drive radio frequency signal comprises:
performing subcarrier modulation according to the drive radio frequency signal to output a signal having a frequency twice a frequency of the drive radio frequency signal.

14. The method of claim 12 or 13, after performing at least two stages of modulation on the received signal, further comprising:
performing optical wavelength division multiplexing processing on the signal subjected to the two stages of modulation.

15. The method of claim 12 or 13, before performing at least two stages of modulation on the received signal, further comprising:
performing CDM processing on multiple user code streams; and
performing FDM processing on each user code stream subjected to the CDM processing.

16. The method of claim 14, further comprising:
transmitting the signal subjected to the optical wavelength division multiplexing processing to a RRU through an optical fiber, so as to allow the RRU to perform demultiplexing processing on the received signal, and transmit the demultiplexed signal to a UE through an antenna.
